# EUROPEAN PATENT SPECIFICATION

(11) **EP 2 105 181 B1**
(45) Date of publication and mention of the grant of the patent: **23.06.2010**
(21) Application number: 08291128.0
(22) Date of filing: 28.11.2008
(51) Int. Cl.: B01D 39/20, F01N 3/022, C04B 38/00

(54) **Honeycomb structured body**
Wabenstrukturkörper
Corps structuré en nid d'abeille

(30) Priority: 24.03.2008 WO PCT/JP2008/055457
(43) Date of publication of application: 30.09.2009
(73) Proprietor: Ibiden Co., Ltd., Ogaki-shi, Gifu 503-8604 (JP)
(72) Inventor: Ohno, Kazushige, Ibi-gun 501-0695 Gifu (JP); Ogyu, Kazutake, Ibi-gun 501-0695 Gifu (JP); Ishikawa, Shigeharu, Ibi-gun 501-0695 Gifu (JP)
(74) Representative: Uchida, Kenji

(56) References cited:
- EP-A- 0 554 104
- HIROSHI OKAZOE ET ALL: "Study of SiC Application to Diesel Particulate Filter (Part 2)" SAE TECHNICAL PAPER SERIES NR 930361, 1993, XP002537033

## Description

### TECHNICAL FIELD

This invention relates to a honeycomb structured body.

### BACKGROUND ART

In recent years, particulate matter (hereinafter, also simply referred to as particulates or PM) contained in exhaust gases discharged from internal combustion engines of vehicles such as buses and trucks, construction machines and the like has raised serious problems to the environment and the human body.
For this reason, various porous ceramic honeycomb structured bodies have been proposed as diesel particulate filters (hereinafter, also simply referred to as DPF) that capture particulates in exhaust gases and purify the exhaust gases.

As such a honeycomb structured body, for example, there has been proposed a honeycomb structured body manufactured as follows: combining a plurality of rectangular pillar-shaped honeycomb fired bodies with one another with an adhesive layer interposed therebetween: and cutting into a predetermined shape (for example, see Patent Document 1).
Moreover, there has been proposed another honeycomb structured body manufactured by combining a plurality of honeycomb fired bodies, respectively manufactured through extrusion molding into predetermined shapes in advance, with one another with an adhesive layer interposed therebetween (for example, see Patent Document 2).

Patent Document 1: WO01/23069 A1
Patent Document 2: JP-A 2004-154718

### DISCLOSURE OF THE INVENTION

### PROBLEMS TO BE SOLVED BY THE INVENTION

In a case where a honeycomb structured body is used as a DPF, after a predetermined amount of particulates have been captured, regenerating process for burning and removing these particulates is carried out.
In this regenerating process, high-temperature exhaust gases discharged from an internal combustion engine are allowed to flow into a cell near a center portion of the honeycomb structured body that allows exhaust gases to flow comparatively easily. Moreover, since more particulates are captured in a vicinity of the center portion of the honeycomb structured body, the burning of the particulates starts from the vicinity of the center portion of the honeycomb structured body.
For this reason, the temperature of the vicinity of the center portion of the honeycomb structured body tends to become higher than the temperature of a vicinity of the peripheral portion of the honeycomb structured body, resulting in occurrence of a temperature difference in the radial direction of the honeycomb structured body.
When such a temperature difference occurs, a difference in degrees of thermal expansion occurs between the vicinity of the center portion and the vicinity of the peripheral portion of the honeycomb structured body, with a result that a stress is generated on the peripheral face of the honeycomb structured body.
Consequently, there may be a case where a crack occurs from the adhesive layer and the honeycomb structured body is damaged. Moreover, there may be another case where the crack develops to rupture the adhesive layer, so that the honeycomb fired body is displaced or further comes off from the honeycomb structured body because of application of a pressure by the exhaust gases.

An object of the present invention is to prevent damage to the honeycomb structured body, displacement of the honeycomb fired body, and a coming off of the honeycomb fired body from the honeycomb structured body.

### MEANS FOR SOLVING THE PROBLEMS

The inventors of the present invention made extensive research efforts so as to prevent damage to the honeycomb structured body, displacement of the honeycomb fired body, and a coming off of the honeycomb fired bodies, and consequently, the inventors of the present invention have completed the present invention.
That is, an invention according to claim 1 is a honeycomb structured body comprising: a plurality of pillar-shaped honeycomb fired bodies combined with one another with an adhesive layer interposed therebetween, each of the honeycomb fired bodies having a large number of cells longitudinally placed in parallel with one another with a cell wall interposed therebetween, wherein the plurality of the honeycomb fired bodies comprise a center-portion honeycomb fired body located in a center portion of the honeycomb structured body, and a plurality of periphery honeycomb fired bodies, wherein each periphery honeycomb fired body forms a part of a peripheral face of the honeycomb structured body, and the periphery honeycomb fired body comprises at least one face with irregularities formed thereon among faces of the periphery honeycomb fired body in contact with the adhesive layer.
In the present specification, the center-portion honeycomb fired body refers to a honeycomb fired body that does not constitute the peripheral face of the honeycomb structured body on a cross section perpendicular to the longitudinal direction of the honeycomb structured body.

Here, in the honeycomb structured body according to claim 1, the irregularities are formed on a predetermined face of the periphery honeycomb fired body, so that an adhesive strength between the periphery honeycomb fired body and the adhesive layer is made higher. For this reason, a crack oriented from the adhesive layer hardly occurs. Therefore, it is possible to prevent damage to the honeycomb structured body, displacement of the honeycomb fired body, and a coming off of the honeycomb fired body.

The above, and the other objects, features and advantages of the present invention will be made apparent from the description of preferred embodiments, given as non-limiting examples, with reference to the accompanying drawings in which:
Fig. 1 is a perspective view schematically showing a honeycomb structured body of the present invention;
Fig. 2(a) is a perspective view schematically showing a center-portion honeycomb fired body constituting the honeycomb structured body of the present invention;
Fig. 2(b) is an A-A line cross-sectional view of the center-portion honeycomb fired body shown in Fig. 2(a);
Fig. 3(a) is a perspective view schematically showing a periphery honeycomb fired body constituting the honeycomb structured body of the present invention;
Fig. 3(b) is another perspective view of the periphery honeycomb fired body shown in Fig. 3(a) observed from a direction different from that in Fig. 3(a);
Fig. 4 is a plan view schematically showing a cross section of the honeycomb structured body of the present invention when cut perpendicularly to the longitudinal direction thereof;
Fig. 5(a) is a perspective view schematically showing a periphery honeycomb fired body constituting the honeycomb structured body of the first embodiment;
Fig. 5(b) is another perspective view of the periphery honeycomb fired body shown in Fig. 5(a) observed from a direction different from that in Fig. 5(a);
Fig. 6 is a cross-sectional view schematically showing a cross section of the honeycomb structured body of the first embodiment when cut perpendicularly to the longitudinal direction thereof;
Fig. 7(a) is a perspective view schematically showing a periphery honeycomb fired body other than the periphery honeycomb fired body shown in Figs. 5(a) and 5(b);
Fig. 7 (b) is a perspective view of the periphery honeycomb fired body shown in Fig. 7(a) observed from a direction different from that in Fig. 7(a);
Fig. 8 is a cross-sectional view schematically showing a cross section of the honeycomb structured body including the periphery honeycomb fired body shown in Figs. 7(a) and 7(b); and
Figs. 9(a) and 9(b) are cross-sectional views each illustrating another example of the method for manufacturing the honeycomb structured body of the present invention, wherein:
   10, 100, 200, 300... Honeycomb structured body; 20, 120, 220, 320... Center-portion honeycomb fired body; 30, 130, 230, 33... Periphery honeycomb fired body; 40, 140, 240, 340... Adhesive layer; 21, 31, 131... Cell; 22, 32, 132... Cell wall; 23, 33, 133... Plug.

First, the entire configuration of the honeycomb structured body according to claim 1 will be described.

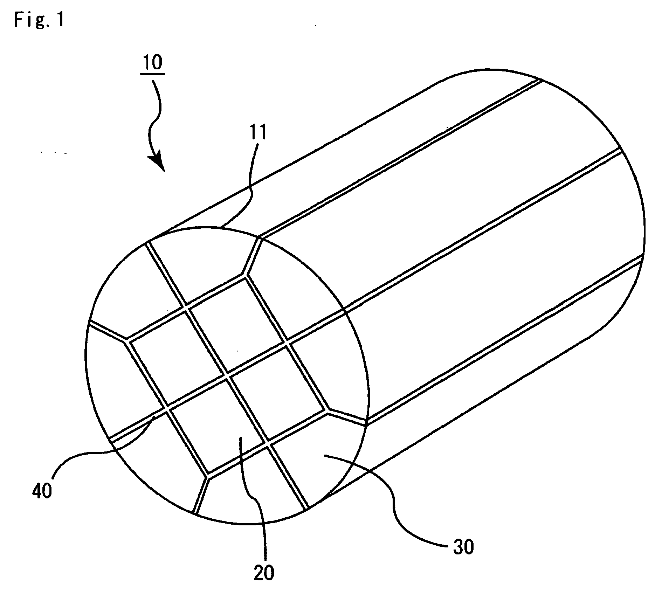

Fig. 1 is a perspective view schematically showing the honeycomb structured body according to claim 1.
As shown in Fig. 1, a honeycomb structured body 10 is constituted by four center-portion honeycomb fired bodies 20 positioned in the center portion of the honeycomb structured body 10, eight periphery honeycomb fired bodies 30 each constituting a part of a peripheral face 11 of the honeycomb structured body 10 and an adhesive layer 40 existing between these honeycomb fired bodies (the center-portion honeycomb fired body 20 and the periphery honeycomb fired body 30) so as to bond the honeycomb fired bodies to each other.

A configuration of the center-portion honeycomb fired body 20 will be described with reference to the drawings in the following.

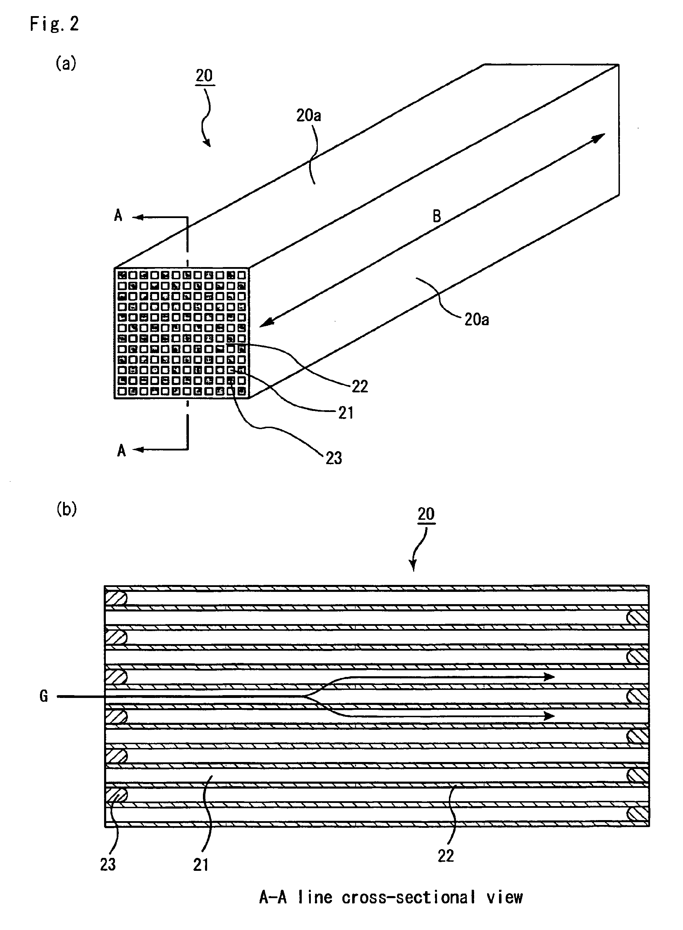

Fig. 2 (a) is a perspective view schematically showing the center-portion honeycomb fired body constituting the honeycomb structured body according to claim 1, and Fig. 2(b) is an A-A line cross-sectional view of the center-portion honeycomb fired body shown in Fig. 2(a).

As shown in Fig. 2 (a), the center-portion honeycomb fired body 20 is an almost rectangular pillar-shaped honeycomb fired body which includes four planes 20a having areas mutually equal to each other and has a cross section in an almost square shape. Further, as shown in Fig. 2(b), a large number of cells 21 are longitudinally (indicated by an arrow "B" with two heads in Fig. 2(a)) placed in parallel with one another with a cell wall 22 interposed therebetween, and either one end of each cell 21 is sealed with a plug 23 in the center-portion honeycomb fired body 20. Therefore, exhaust gases G (see an arrow in Fig. 2(b)) having flowed into the cell 21 with an opening on one of the end faces flow out from another cell 21 with an opening on the other end face, after surely passing through the cell wall 22 that separates the cells 21.
Thus, the cell wall 22 functions as a filter for capturing PM and the like.

A configuration of the periphery honeycomb fired body will be described with reference to drawings in the following.

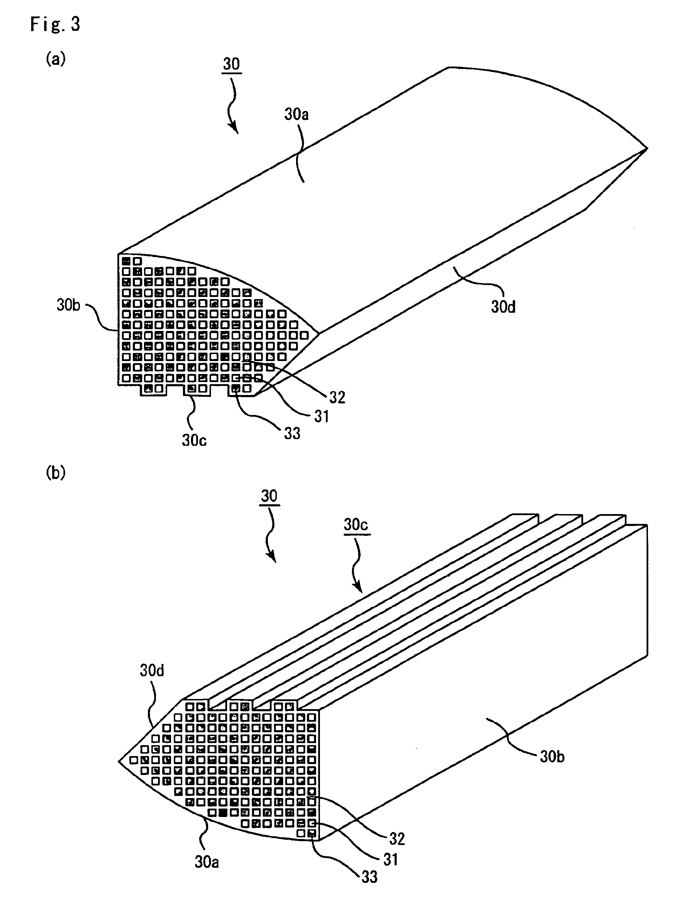

Fig. 3(a) is a perspective view schematically showing a periphery honeycomb fired body constituting the honeycomb structured body according to claim 1, and Fig. 3(b) is another perspective view of the periphery honeycomb fired body shown in Fig. 3(a) observed from a direction different from that in Fig. 3(a).

As shown in Figs. 3(a) and 3(b), the periphery honeycomb fired body 30 includes a large number of cells 31 longitudinally placed in parallel with one another with a cell wall 32 interposed therebetween and either one end of each cell 31 is sealed with a plug 33, in the same manner as in the center-portion honeycomb fired body 20 shown in Figs. 2(a) and 2(b). For this reason, the cell wall 32 is allowed to function as a filter for capturing PM and the like, in the same manner as in the center-portion honeycomb fired body 20.
In addition, the shape thereof is a polygonal pillar shape including four faces, that is, a face 30a, faces 30b and 30c having areas mutually equal to each other, and a face 30d. More specifically, among the four faces 30a, 30b, 30c and 30d, the face 30a is a curved face.
Moreover, the face 30c opposing to the curved face 30a is provided with the irregularities formed along the cross-sectional shape of the cells.
Here, the remaining two faces 30b and 30d are plane faces. In the following description, the face with the irregularities formed thereon is also referred to as an uneven face (with depressions and projections).

A specific configuration of the honeycomb structured body according to claim 1 will be described with reference to the drawing in the following.

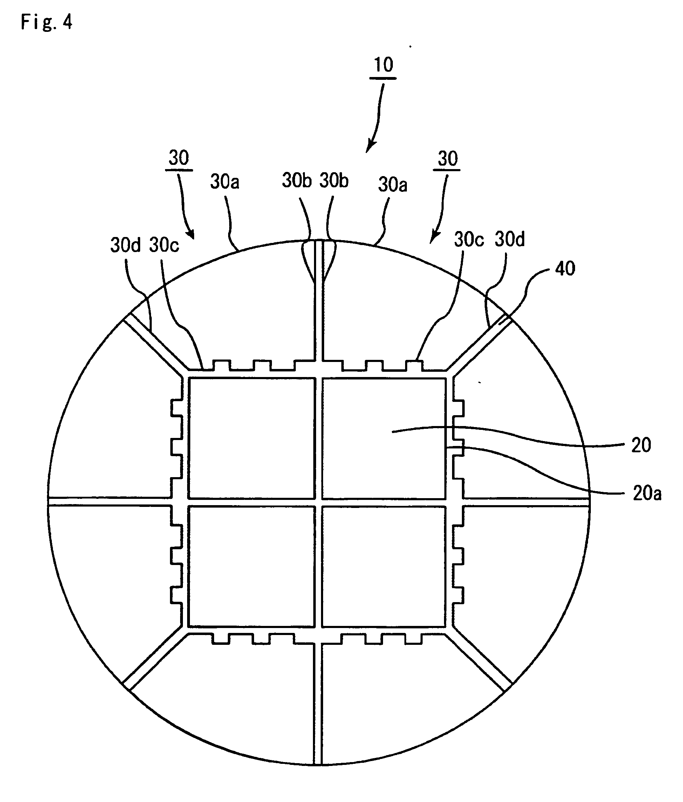

Fig. 4 is a plan view schematically showing a cross section of the honeycomb structured body according to claim 1 when cut perpendicularly to the longitudinal direction thereof.

As shown in Fig. 4, in the honeycomb structured body 10, the curved face 30a of the periphery honeycomb fired body 30 forms a part of the peripheral face of the honeycomb structured body 10.
Moreover, the plane 30b is bonded to a plane 30b of another periphery honeycomb fired body 30 adjacent thereto, with the adhesive layer 40 interposed therebetween.
The uneven face 30c is bonded to the plane 20a of the center-portion honeycomb fired body 20, with the adhesive layer 40 interposed therebetween.
The plane 30d is bonded to a plane 30d of still another periphery honeycomb fired body 30 adjacent thereto, with the adhesive layer 40 interposed therebetween.

Here, a contact area between the uneven face 30c of the periphery honeycomb fired body 30 and the adhesive layer 40 is larger than a contact area between the plane with no irregularities formed thereon of the honeycomb fired body and the adhesive layer (a contact area between the plane 20a of the center-portion honeycomb fired body 20 and the adhesive layer 40, a contact area between the plane 30b of the periphery honeycomb fired body 30 and the adhesive layer 40, or a contact area of the plane 30d of the periphery honeycomb fired body 30 and the adhesive layer 40).
For this reason, adhesive strength between the periphery honeycomb fired body 30 and the adhesive layer 40 becomes higher, so that a crack oriented from the adhesive layer hardly occurs.
Therefore, the honeycomb structured body of the present invention is capable of preventing the damage to the honeycomb structured body 10, the displacement of the periphery honeycomb fired body 30, and the coming off of the periphery honeycomb fired body 30, which are caused by a crack occurring from the adhesive layer.

The honeycomb structured body according to claim 2 is the invention according to claim 1, wherein one of the faces with the irregularities formed thereon in the periphery honeycomb fired body is the face having the smallest area among the faces in contact with the adhesive layer.
In the honeycomb structured body according to claim 2, the irregularities are formed on a face having the smallest area among the faces of the periphery honeycomb fired body. Therefore, compared to a case where no irregularities are formed on the face, a contact area between the face and the adhesive layer becomes larger, so that adhesive strength between the periphery honeycomb structured body and the adhesive layer in contact with the face becomes higher. Accordingly, a crack hardly occurs from the adhesive layer that is in contact with the face having the smallest area among the faces of the periphery honeycomb structured body.
Therefore, the honeycomb structured body according to claim 2 is particularly suitable for achieving an effect of the present invention.
Here, in the present specification, in the case where areas of all the faces of the periphery honeycomb fired body are equal to each other, each of the faces is referred to as a face having the smallest area among the faces that are in contact with the adhesive layer.

The honeycomb structured body according to claim 3 is the invention according to claim 1 or 2, wherein one of the faces with the irregularities formed thereon in the periphery honeycomb fired body is the face in contact with an other periphery honeycomb fired body with the adhesive layer interposed therebetween.
As described above, in the regenerating process, a stress is generated on the peripheral part of the honeycomb structured body. Accordingly, a crack tends to occur particularly from the adhesive layer that bonds periphery honeycomb fired bodies to each other that constitute a part of the peripheral face of the honeycomb structured body.
In the honeycomb structured body according to claim 3, however, among the faces of the periphery honeycomb fired bodies, the irregularities are formed on the face which is in contact with another periphery honeycomb fired body with the adhesive layer interposed therebetween. Therefore, compared to a case where no irregularities are formed on the face, a contact area between the face and the adhesive layer becomes larger, so that adhesive strength between the periphery honeycomb fired body and the adhesive layer that bonds the periphery honeycomb fired bodies to each other becomes higher. For this reason, a crack hardly occurs from the adhesive layer that bonds the periphery honeycomb fired bodies to each other.
Accordingly, the honeycomb structured body according to claim 3 is particularly suitable for achieving the effect of the present invention.

The honeycomb structured body according to claim 4 is the invention according to any of claims 1 to 3, wherein an area of a cross section perpendicular to the longitudinal direction of the periphery honeycomb fired body is larger than an area of a cross section perpendicular to the longitudinal direction of the center-portion honeycomb fired body.
The honeycomb structured body according to claim 4 having such a configuration is capable of suitably achieving the effect of the present invention as well.

### BEST MODE FOR CARRYING OUT THE INVENTION

### (First Embodiment)

In a honeycomb structured body of a first embodiment that is one embodiment of the present invention, one of the faces of the periphery honeycomb fired body, with irregularities formed thereon, is the face having the smallest area among the faces in contact with the adhesive layer. Further, one of the faces of the periphery honeycomb fired body, with the irregularities formed thereon, is a face in contact with another periphery honeycomb fired body with the adhesive layer interposed therebetween.

The honeycomb fired body constituting the honeycomb structured body of the first embodiment will be described with reference to the drawings in the following.
Here, the shape of the center-portion honeycomb fired body is the same as that of the center-portion honeycomb fired body constituting the honeycomb structured body according to claim 1; therefore, the description thereof will be omitted.

The periphery honeycomb fired bodies will be described with reference to the drawings.

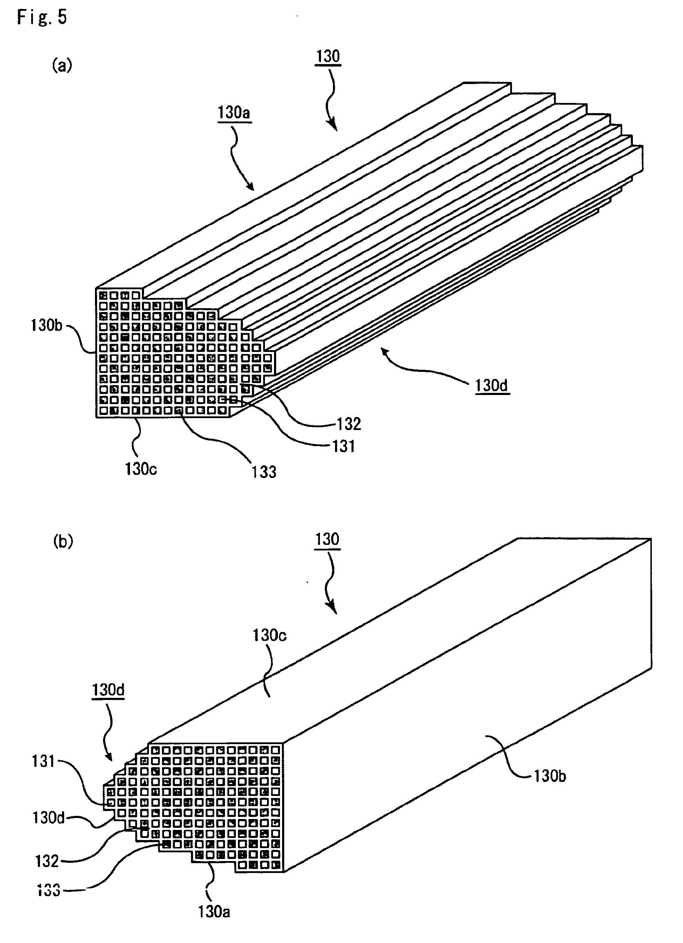

Fig. 5(a) is a perspective view schematically showing a periphery honeycomb fired body constituting the honeycomb structured body of the first embodiment, and Fig. 5(b) is another perspective view of the periphery honeycomb fired body shown in Fig. 5 (a) observed from a direction different from that in Fig. 5(a).

As shown in Figs. 5(a) and 5(b), a periphery honeycomb fired body 130 includes a large number of cells 131 longitudinally placed in parallel with one another with a cell wall 132 interposed therebetween, and either one end of each cell 131 is sealed with a plug 133, in the same manner as in a center-portion honeycomb fired body 120. For this reason, the cell wall 132 is allowed to function as a filter for capturing PM and the like.
In addition, the shape of the periphery honeycomb fired body 130 is a polygonal pillar shape including four faces, that is, a face 130a, faces 130b and 130c having areas mutually equal to each other, and a face 130d. Specifically, among the four faces 130a, 130b, 130c and 130d, the face 130a and the face 130d having the smallest area thereamong are formed into uneven faces with the irregularities formed thereon along cross-sectional shapes of cells. The remaining two faces 130b and 130c are plane faces.

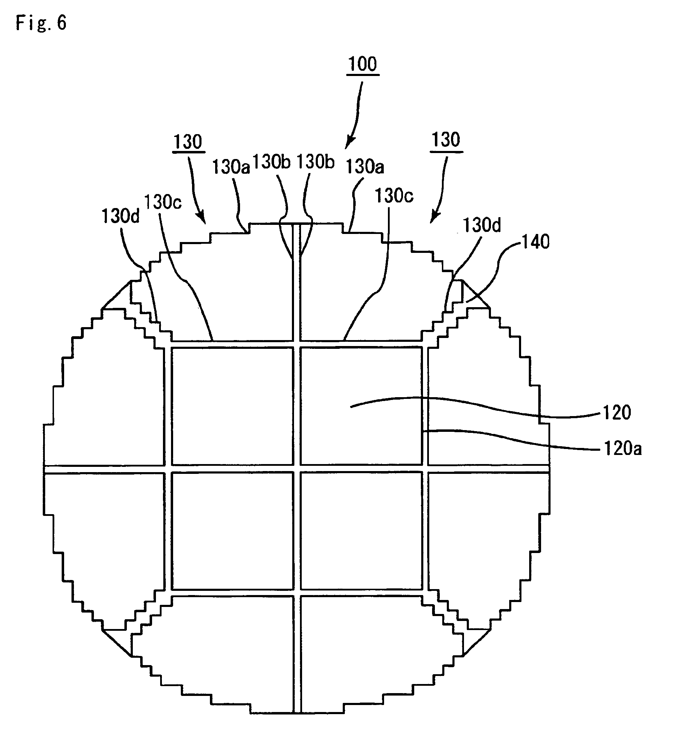

A detailed configuration of a honeycomb structured body 100 of the present embodiment will be described with reference to Fig. 6.
Fig. 6 is a cross-sectional view schematically showing a cross section of the honeycomb structured body of the first embodiment when cut perpendicularly to the longitudinal direction thereof. In this case, the periphery honeycomb fired body 130 shown in Figs. 5(a) and 5(b) is used as a periphery honeycomb fired body.

As shown in Fig. 6, the honeycomb structured body 100 of the present embodiment is constituted by four center-portion honeycomb fired bodies 120 positioned in the center portion of the honeycomb structured body 100, eight periphery honeycomb fired bodies 130 each constituting a part of a peripheral face of the honeycomb structured body 100 and an adhesive layer 140 existing between these honeycomb fired bodies (the center-portion honeycomb fired bodies 120 and the periphery honeycomb fired bodies 130) so as to bond the honeycomb fired bodies to each other, in the same manner as in the honeycomb structured body according to claim 1.

As shown in Fig. 6, on the uneven face 130a of the periphery honeycomb fired body 130, no adhesive layer (coat layer) 140 is formed, and the uneven face 130a forms a part of the peripheral face of the honeycomb structured body 100.
The uneven face 130d is bonded to an uneven face 130d of another periphery honeycomb fired body 130 adjacent thereto, with the adhesive layer 140 interposed therebetween.
The plane 130b is bonded to a plane 130b of still another periphery honeycomb fired body 130 adjacent thereto, with the adhesive layer 140 interposed therebetween.
The plane 130c is bonded to the plane 120a of the center-portion honeycomb fired body 120, with the adhesive layer 140 interposed therebetween.
That is, in the honeycomb structured body 100 of the present embodiment, the irregularities are formed on the face 130d having the smallest area among the faces 130b, 130c and 130d, which are in contact with the adhesive layer 140 of the periphery honeycomb fired body 130.

The following description will discuss a method for manufacturing the honeycomb structured body of the present embodiment.
(1) A molding process is carried out to manufacture a honeycomb molded body by extrusion-molding a wet mixture containing ceramic powders and a binder.
   Specifically, first, silicon carbide powders having different average particle diameters as ceramic powders, an organic binder, a plasticizer in liquid form, a lubricant and water are mixed to prepare the wet mixture for manufacturing a honeycomb molded body.
   Successively, this wet mixture is loaded into an extrusion molding machine. A honeycomb molded body having a predetermined shape is manufactured by loading the wet mixture into the extrusion molding machine and extrusion-molding the wet mixture.
   At this time, a die for extrusion molding to be used may be selected in accordance with the cross-sectional shape of the honeycomb fired body, in order to manufacture the honeycomb fired bodies having the various shapes.

(2) Next, the honeycomb molded body is cut into a predetermined length, and dried by using a drying apparatus, such as a microwave drying apparatus, a hot-air drying apparatus, a dielectric drying apparatus, a reduced-pressure drying apparatus, a vacuum drying apparatus and a freeze drying apparatus, and a sealing process is carried out by filling predetermined cells with a plug material paste to be a plug for sealing the cells.
   Here, conditions conventionally used upon manufacturing a honeycomb fired body are applicable for carrying out the cutting process, the drying process and the sealing process.

(3) Next, a degreasing process is carried out to remove the organic components in the honeycomb molded body by heating the honeycomb molded body in a degreasing furnace. Then, the degreased honeycomb molded body is transported to a firing furnace, and a firing process is carried out to manufacture a honeycomb fired body.
   Here, conditions conventionally used upon manufacturing a honeycomb fired body are applicable for carrying out the degreasing process and the firing process.
   By following the above-mentioned processes, the center-portion honeycomb fired body and the periphery honeycomb fired body are manufactured.

(4) Moreover, an adhesive paste is applied to a predetermined side face of each of the center-portion honeycomb fired body and the periphery honeycomb fired body, which have cells each sealed at a predetermined end portion, so that an adhesive paste layer is formed, and after the above process, another honeycomb fired body is successively laminated on this adhesive paste layer. By repeating above process, combining process is carried out to manufacture a honeycomb structured body having a predetermined shape in which the honeycomb fired bodies are combined with one another.
   Here, as the adhesive paste, for example, a substance containing an inorganic binder, an organic binder and inorganic particles is used. Moreover, the adhesive paste may further contain at least one of inorganic fibers and whiskers.
   Moreover, if necessary, a coat layer forming process may be carried out, in which a sealing material paste is applied to the periphery of the honeycomb structured body, and dried and solidified thereon to form a coat layer.
   As the sealing material paste, the same paste as the above adhesive paste is used. Here, as a coat layer paste, a paste having a different composition may be used.
   By following the above-mentioned process, the honeycomb structured body of the present embodiment can be manufactured.

The effects of the honeycomb structured body of the present embodiment will be listed in the following.
(1) In the honeycomb structured body of the present embodiment, among faces of the periphery honeycomb fired body, which are in contact with the adhesive layer, the irregularities are formed on a face that is in contact with another periphery honeycomb fired body with the adhesive layer interposed therebetween, so that adhesive strength between the periphery honeycomb fired body and the adhesive layer bonding the periphery honeycomb fired bodies to each other is made higher. For this reason, a crack hardly occurs from the adhesive layer bonding the periphery honeycomb fired bodies to each other. Accordingly, the honeycomb structured body of the present embodiment is capable of preventing damage to the honeycomb structured body, displacement of the periphery honeycomb fired body and a coming off of the periphery honeycomb fired body.

(2) In the honeycomb structured body of the present embodiment, one of the faces with the irregularities formed thereon in the periphery honeycomb fired body is the face having the smallest area among the faces in contact with the adhesive layer.
For this reason, compared to the case where no irregularities are formed on the face, the contact area between the face and the adhesive layer becomes larger, so that adhesive strength between the periphery honeycomb structured body and the adhesive layer becomes higher.
Therefore, the honeycomb structured body of the present embodiment is particularly suitable for achieving the effect of the present invention.

### EXAMPLES

### (Example 1)

The following description will discuss Examples specifically disclosing the first embodiment of the present invention. Here, the present invention is not intended to be limited only to these Examples.

(1) An amount of 52.8% by weight of a silicon carbide coarse powder having an average particle diameter of 22 µm and 22.6% by weight of a silicon carbide fine powder having an average particle diameter of 0.5 µm were mixed. To the resulting mixture, 2.1% by weight of an acrylic resin, 4.6% by weight of an organic binder (methylcellulose), 2.8% by weight of a lubricant (UNILUB, manufactured by NOF Corporation), 1.3% by weight of glycerin, and 13.8% by weight of water were added, and then kneaded to prepare a wet mixture. Then, molding process for extrusion-molding the obtained wet mixture was carried out.
   In the present process, a raw honeycomb molded body with no cells being sealed, which has almost the same shape as that of the center-portion honeycomb fired body 20 shown in Figs. 2(a) and 2(b) and is to be the center-portion honeycomb fired body after firing process, and a raw honeycomb molded body with no cells being sealed, which has almost the same shape as that of the periphery honeycomb fired body 130 shown in Figs. 5(a) and 5(b) and is to be the periphery honeycomb fired body after firing process, were manufactured by changing the shape of a die used for extrusion molding.

(2) Next, the raw honeycomb molded body was dried by using a microwave drying apparatus so that a dried honeycomb molded body is obtained. Then, using a plug material paste having the same composition as that of the wet mixture, predetermined cells were filled, and the dried honeycomb molded body filled with the plug material paste was again dried by using a drying apparatus.

(3) The dried honeycomb molded body was degreased at 400°C, and then fired at 2200°C under normal pressure and argon atmosphere for three hours.
   Accordingly, the center-portion honeycomb fired body 120 having the same shape as that of the center-portion honeycomb fired body 20 shown in Figs. 2 (a) and 2 (b) and comprising a porous silicon carbide sintered body with physical properties of a porosity of 45%, an average pore diameter of 15 µm, a size of 34.3 mm × 34.3 mm × 150 mm, a cell density of 300 pcs/inch² and a thickness of the cell wall of 0.25 mm (10 mil) was manufactured. And the periphery honeycomb fired body 130 having a shape shown in Fig. 5(a) and Fig. 5(b) and having the porosity, the average pore diameter, the cell density and the thickness of the cell wall as same as those of the center-portion honeycomb fired body 120 was manufactured.

(4) An adhesive paste was applied to predetermined side faces of the center-portion honeycomb fired body 120 and the periphery honeycomb fired body 130, and four center-portion honeycomb fired bodies 120 and eight periphery honeycomb fired bodies 130 were bonded to one another with the adhesive paste being interposed therebetween, so as to be disposed as shown in Fig. 6. Then, the adhesive paste was heated at 180°C for 20 minutes so as to be solidified, thereby a cylindrical honeycomb fired body, which has the adhesive layer 140 having a thickness of 1 mm, was manufactured.
   Here, the adhesive paste including 30.0% by weight of silicon carbide particles having an average particle diameter of 0.6 µm, 21.4% by weight of silica sol, 8.0% by weight of carboxymethylcellulose, and 40.6% by weight of water was used.

The cross-sectional shape of the honeycomb structured body manufactured in Example 1 is as shown in Fig. 6.
That is, in the honeycomb structured body 100, the irregularities are formed on the face 130a and the face 130d of the periphery honeycomb fired body 130. Moreover, the face (uneven face) 130d with the irregularities formed thereon corresponds to the face having the smallest area among the faces in contact with the adhesive layer 140, and is in contact with the uneven face 130d of another periphery honeycomb fired body 130 with the adhesive layer 140 interposed therebetween (see Fig. 6).

### (Comparative Example 1)

(1) In the same manner as in the process (1) of Example 1, a raw honeycomb molded body, which is to be a center-portion honeycomb fired body after firing process, was manufactured.
   Moreover, by changing the shape of a die for extrusion molding, a raw honeycomb molded body was manufactured, which is to be the periphery honeycomb fired body after firing process and has the same shape as that of the periphery honeycomb fired body manufactured in Example 1 except that a face corresponding to the uneven face 130a of the periphery honeycomb fired body manufactured in Example 1 is formed into a curved face and a face corresponding to the uneven face 130d is formed into a plane face. The processes of (2) to (4) in Example 1 were carried out by using these raw honeycomb molded bodies, so that there was manufactured a honeycomb structured body having the same shape as that in Example 1, except that the uneven face 130a of the periphery honeycomb fired body 130 is formed into a curved face and the uneven face 130d is formed into a plane face in the cross-sectional shape of the honeycomb structured body manufactured in Example 1 shown in Fig. 6.

### (Evaluation of honeycomb structured body)

With regard to the honeycomb structured bodies manufactured in Example 1 and in Comparative Example 1, a cycle test in a following method was performed to confirm presence or absence of damage to the adhesive layer, presence or absence of the displacement of the honeycomb fired body, and presence or absence of the coming off of the honeycomb fired body after the cycle test.

### (Cycle test)

First, each of the honeycomb structured bodies according to Example 1 and Comparative Example 1 was placed in an exhaust passage of an engine, and a commercially available catalyst supporting carrier (diameter: 144 mm, length: 100 mm, cell density: 400 cells/inch², amount of supported platinum: 5 g/L) was placed in the exhaust passage of an engine at a position closer to a gas-inlet side than the honeycomb structured body, so that an exhaust gas purifying apparatus was obtained. Particulates were captured for nine hours, while the engine was driven at the number of revolutions of 3000 min⁻¹ and a torque of 50 Nm. The amount of the captured particulates was 10 g/L.

Thereafter, the engine was driven at the number of revolutions of 1250 min⁻¹ and a torque of 60 Nm, and when the temperature of the honeycomb structured body became constant, the state was kept for one minute. Subsequently, a post injection was performed, and then the temperature of exhaust gases was raised by having the exhaust gases pass through the oxidation catalyst present at the gas-inlet side, so as to burn particulates.
The conditions for the post injection were set so that the temperature of the center portion of the honeycomb structured body was raised and became almost constant at 600°C within one minute from the initiation. Then, after the above-mentioned processes were repeated 20 times, observations were performed to determine whether or not any cracks had occurred in the honeycomb structured body.

As a result, in the honeycomb structured body of Example 1, any of the damage to the honeycomb structured body, the displacement of the honeycomb fired body and the coming off of the honeycomb fired body had not occurred.
On the other hand, in the honeycomb structured body of Comparative Example 1, a crack had occurred in the adhesive layer and the honeycomb structured body was damaged. Further, a part of the honeycomb fired bodies came off. This is presumably because, in the honeycomb structured body of Comparative Example 1, adhesive strength between the honeycomb fired bodies was lower than a stress on the peripheral face of the honeycomb structured body generated by performing the regenerating process repeatedly.

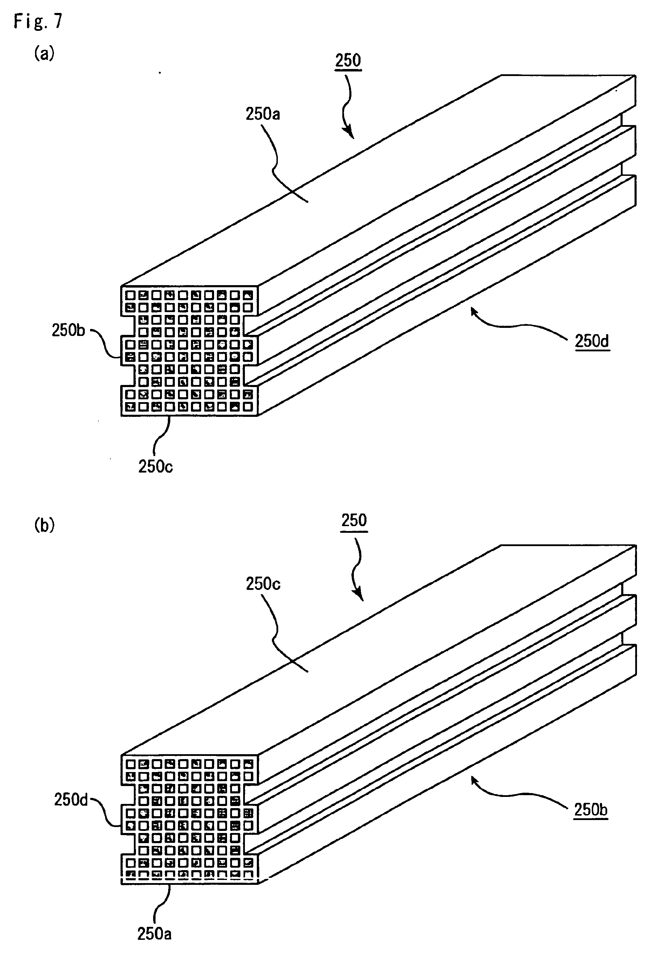

In addition to the center-portion honeycomb fired body having the shape shown in Fig. 2 and the periphery honeycomb fired body having the shape shown in Fig. 5, a periphery honeycomb fired body shown in Fig. 7 may be used to constitute the honeycomb structured body of the first embodiment.
Fig. 7(a) is a perspective view schematically showing a periphery honeycomb fired body other than the periphery honeycomb fired body shown in Figs. 5(a) and 5(b), and Fig. 7 (b) is a perspective view of the periphery honeycomb fired body shown in Fig. 7 (a) observed from a direction different from that in Fig. 7(a).
A periphery honeycomb fired body 250 shown in Figs. 7(a) and 7(b) has the same configuration as that of the center-portion honeycomb fired body shown in Fig. 2, except that the irregularities are formed on faces 250b and 250d opposing to each other and the remaining faces 250a and 250c are formed into plane faces.

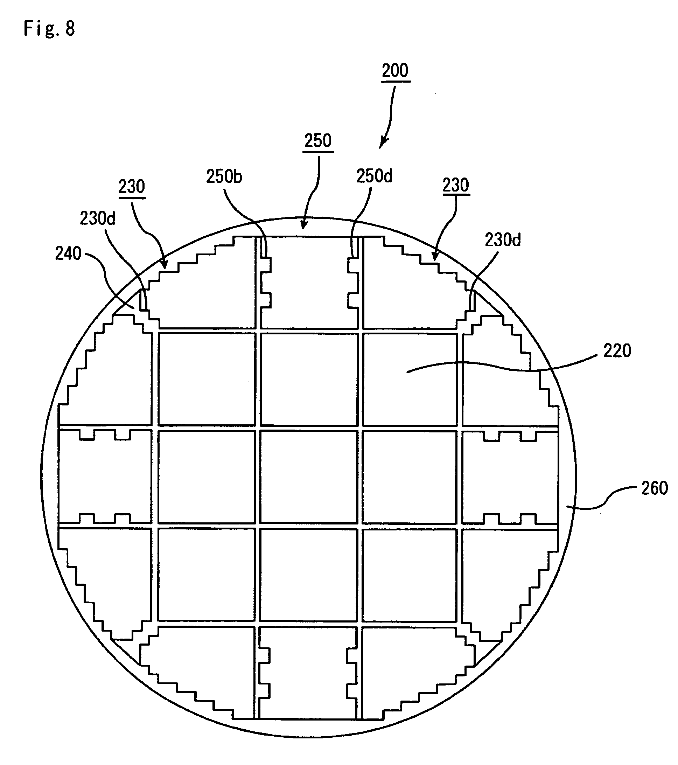

Fig. 8 shows a configuration of the honeycomb structured body of the first embodiment, which includes the honeycomb fired body shown in Figs. 7(a) and 7(b).
Fig. 8 is a cross-sectional view schematically showing a cross section of a honeycomb structured body including the periphery honeycomb fired body shown in Figs. 7 (a) and 7 (b) when cut perpendicularly to the longitudinal direction thereof.
As shown in Fig. 8, a honeycomb structured body 200 is constituted by nine center-portion honeycomb fired bodies 220 positioned in the center portion of the honeycomb structured body 200, twelve periphery honeycomb fired bodies 230 (250) each constituting a part of a peripheral face of the honeycomb structured body 200, an adhesive layer 240 existing between these honeycomb fired bodies (the center-portion honeycomb fired bodies 220 and the periphery honeycomb fired bodies 230 (250)) so as to bond the honeycomb fired bodies to each other, and a coat layer 260 that forms the peripheral face of the honeycomb structured body 200. Here, the periphery honeycomb fired bodies are constituted by eight periphery honeycomb fired bodies 230 having mutually different shapes and four periphery honeycomb fired bodies 250 shown in Figs. 7(a) and 7(b).
Also in the honeycomb structured body 200 having such a configuration, the irregularities are formed on at least one face 230d (250b and 250d) among faces in contact with the adhesive layer 240 of the periphery honeycomb fired bodies 230 (250).
Moreover, the face 230d (250b and 250d) with the irregularities formed thereon corresponds to the face having the smallest area among the faces in contact with the adhesive layer 240 of the periphery honeycomb fired bodies 230 (250).

### (Other Embodiments)

In the method for manufacturing the honeycomb structured body of the first embodiment, honeycomb fired bodies molded into predetermined shapes are preliminarily manufactured so as to manufacture a honeycomb structured body; however, a honeycomb structured body in accordance with an embodiment of the present invention may be manufactured, for example, by using the following method.
By exemplifying a case of manufacturing the honeycomb structured body of the first embodiment, another method for manufacturing the honeycomb structured body in accordance with the embodiment of the present invention will be described in the following.

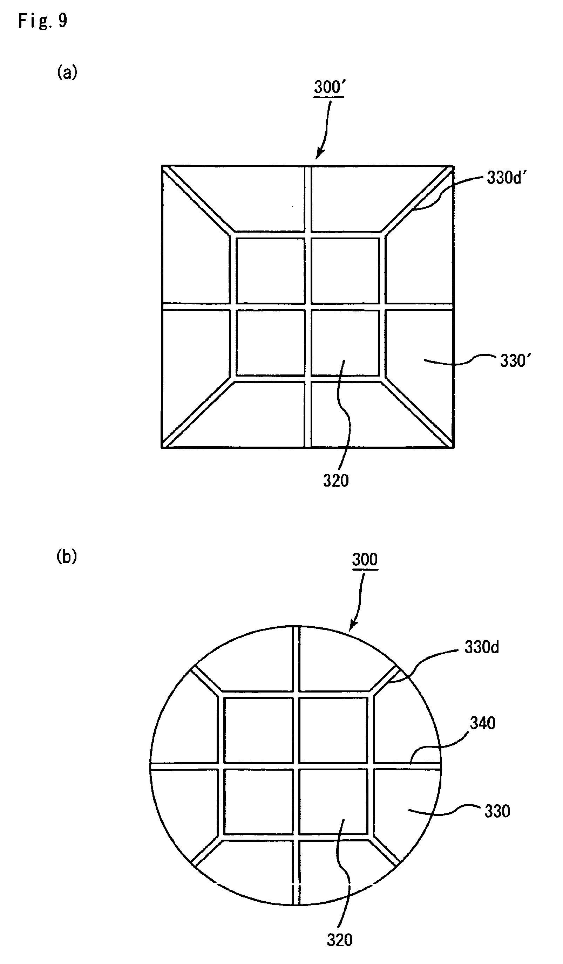

Figs. 9(a) and 9(b) are cross-sectional views each illustrating another example of the method for manufacturing the honeycomb structured body in accordance with the embodiment of the present invention.
(1) By using the same methods as those of the processes (1) to (3) for manufacturing the honeycomb structured body of the first embodiment, honeycomb fired body having cells each sealed at ether one end are manufactured.
   In this case, a center-portion honeycomb fired body 320 having almost the same shape as that of the center-portion honeycomb fired body 20 shown in Figs. 2(a) and 2(b), and a periphery honeycomb fired body 330' having a trapezoidal shape in its cross section and with the irregularities formed on a face 330d' as shown in Fig. 9(a) are manufactured. Here, it is to be noted that the irregularities on the face 330d' are not shown in the drawings.

(2) Next, in the same manner as in the process (4) of the first embodiment, the center-portion honeycomb fired bodies 320 and the periphery honeycomb fired bodies 330' are combined with one another with the adhesive paste layer interposed therebetween so as to be disposed as shown in Fig. 9(a), and by solidifying the adhesive paste layer, an aggregated body 300' of honeycomb fired bodies is manufactured.

(3) Next, periphery processing is carried out on the side faces of the aggregated body 300' of honeycomb fired bodies by using a diamond cutter or the like so that the aggregated body 300' of honeycomb fired bodies is processed into a round pillar shape; thus, a honeycomb structured body 300 in which the center-portion honeycomb fired bodies 320 and the periphery honeycomb fired bodies 330 are combined with one another with an adhesive layer 340 interposed therebetween (see Fig. 9(b)) is manufactured.
On the face 330d of the honeycomb structured body 300 thus manufactured, the irregularities are to be formed along the cross sectional shape of cells.
Here, if necessary, a coat layer (not shown) may be formed on the peripheral face of the honeycomb structured body 300.

The honeycomb structured body of the present invention need not have cells each sealed at an end portion. Such a honeycomb structured body may be suitably used as a catalyst supporting carrier.

Although not particularly limited, the shape of the honeycomb fired body is preferably designed to easily combine the honeycomb fired bodies with one another when forming a honeycomb structured body. For example, a square, rectangular, hexagonal, sector shape, or the like may be used as its cross-sectional shape.

The shape of the honeycomb structured body of the present invention is not particularly limited to a round pillar shape, and may be a cylindroid shape.

Examples of the inorganic binder contained in the adhesive paste include silica sol, alumina sol, and the like. Each of these may be used alone or two or more kinds of these may be used in combination. Among the inorganic binders, silica sol is preferably used.

Examples of the inorganic particles contained in the adhesive paste include those comprising carbides, nitrides, and the like, more specifically, inorganic particles comprising silicon carbide, silicon nitride, boron nitride or the like. Each of these may be used alone, or two or more kinds of these may be used in combination. Among the inorganic particles, inorganic particles including silicon carbide, which is superior in thermal conductivity, are more preferably used.

Examples of the inorganic fibers and/or the whiskers contained in the adhesive paste include, for example, the inorganic fibers and/or the whiskers including silica-alumina, mullite, alumina, silica, and the like. Each of these may be used alone or two or more kinds of these may be used in combination. Among the inorganic fibers, alumina fibers are preferably used.

The porosity of the honeycomb fired body is not particularly limited, and desirably 35 to 60%.
When the honeycomb structured body is used as a filter, the porosity of less than 35% may easily cause clogging in the honeycomb structured body of the embodiment of the present invention. In contrast, the porosity exceeding 60% may cause a reduction in the strength of the honeycomb fired body, resulting in easy breakage.

The average pore diameter of the honeycomb fired body is desirably 5 to 30 µm.
When the honeycomb structured body is used as a filter, the average pore diameter of less than 5 µm may easily cause clogging due to particulates. In contrast, the average pore diameter exceeding 30 µm may cause particulates to easily pass through the pores. As a result, the honeycomb fired body may fail to capture the particulates, resulting in a failure in functioning as a filter.

Here, the porosity and the pore diameter can be measured through conventionally known methods such as a mercury porosimetry, Archimedes method, and a measuring method using a scanning electronic microscope (SEM).

The cell density in the cross-section of the honeycomb fired body is not particularly limited. However, a desirable lower limit thereof is 31.0 pcs/cm² (200 pcs/inch²) and a desirable upper limit is 93.0 pcs/cm² (600 pcs/inch²). A more desirable lower limit is 38.8 pcs/cm² (250 pcs/inch²) and a more desirable upper limit is 77.5 pcs/cm² (500 pcs/inch²).
Further, the thickness of the cell walls of the honeycomb fired body is not particularly limited, and desirably 0.1 to 0.4 mm.

The main component of constituent materials of the honeycomb fired body is not limited to silicon carbide. Examples of other ceramic materials may comprise ceramic powders of, for example, nitride ceramics such as aluminum nitride, silicon nitride, boron nitride and titanium nitride; carbide ceramics such as zirconium carbide, titanium carbide, tantalum carbide and tungsten carbide; oxide ceramics such as alumina, zirconia, cordierite, mullite, and aluminum titanate; and the like.
Among these components, non-oxide ceramics are preferable, and silicon carbide is more preferable because this is excellent in thermal resistance properties, mechanical strength, thermal conductivity and the like. Moreover, examples of the constituent material of the honeycomb structured body also include silicon-containing ceramics, in which metallic silicon is blended with the above-described ceramics, as well as a ceramic material such as ceramic bound by silicon or silicate compounds. Among these, those ceramics (silicon-containing silicon carbide) in which metallic silicon is blended with silicon carbide are desirably used.
Especially, a silicon-containing silicon carbide ceramic containing 60% by weight or more of silicon carbide is desirable.

The particle diameter of the ceramic powder is not particularly limited, and the ceramic powder that tends not to cause the case where the size of the honeycomb fired body manufactured by the following firing treatment becomes smaller than that of the honeycomb molded body after degreased is preferable.

The organic binder to be mixed in the wet mixture is not particularly limited, and examples thereof include methylcellulose, carboxymethylcellulose, hydroxyethylcellulose, polyethylene glycol, and the like. Methylcellulose is desirable among these. A blending amount of the organic binder is desirably 1 to 10 parts by weight with respect to 100 parts by weight of ceramic powder.
The plasticizer to be mixed in the wet mixture is not particularly limited, and examples thereof include glycerin and the like.
The lubricant to be mixed in the wet mixture is not particularly limited, and examples thereof include polyoxyalkylene-based compounds such as polyoxyethylene alkyl ether and polyoxypropylene alkyl ether, and the like. Specific examples of the lubricant include polyoxyethylene monobutyl ether, polyoxypropylene monobutyl ether, and the like.
Moreover, the plasticizer and the lubricant need not be contained in the wet mixture in some cases.

In addition, a dispersant solution may be used upon preparing the wet mixture, and examples of the dispersant solution include water, an organic solvent such as benzene, alcohol such as methanol, and the like.
Furthermore, a molding auxiliary may be added to the wet mixture.
The molding auxiliary is not particularly limited, and examples thereof include ethylene glycol, dextrin, fatty acid, fatty acid soap, polyalcohol and the like.

Furthermore, a pore-forming agent such as balloons that are fine hollow spheres including oxide-based ceramics, spherical acrylic particles, graphite and the like may be added to the wet mixture, if necessary.
The balloon is not particularly limited, and examples thereof include alumina balloon, glass micro balloon, shirasu balloon, fly ash balloon (FA balloon), mullite balloon and the like. Alumina balloon is desirable among these.

The plug material paste for sealing the cells is not particularly limited, a plug to be manufactured through the subsequent processes desirably has a porosity of 30 to 75%, and for example, it is possible to use a paste having the same composition as that of the wet mixture.

The catalyst to convert and/or purify exhaust gases may be supported on the honeycomb structured body, and desirable examples of the catalyst to be supported include noble metals such as platinum, palladium and rhodium. Among these, platinum is more desirable. Moreover, an alkali metal such as potassium and sodium, and an alkali earth metal such as barium may be used as other catalysts. These catalysts may be used alone, or two or more kinds of these may be used in combination.

In addition to a method for applying an adhesive paste to the side faces of each of the honeycomb fired bodies, the combining process in the method for manufacturing a honeycomb structured body according to the embodiment of the present invention may be carried out, for example, by using a method in which each of the honeycomb fired bodies is temporarily fixed in a molding frame having almost the same shape as the shape of the ceramic block (or an aggregated body of the honeycomb fired bodies) to be manufactured and an adhesive paste is injected into the each gap between the honeycomb fired bodies.

## Claims

1. A honeycomb structured body comprising:
a plurality of pillar-shaped honeycomb fired bodies (20, 30) combined with one another with an adhesive layer interposed therebetween, each of said honeycomb fired bodies having a large number of cells longitudinally placed in parallel with one another with a cell wall interposed therebetween,
wherein
the plurality of said honeycomb fired bodies comprise a center-portion honeycomb fired body (20) located in a center portion of said honeycomb structured body, and a plurality of periphery honeycomb fired bodies (30), wherein each periphery honeycomb fired body forms a part of the peripheral face of said honeycomb structured body, and
said periphery honeycomb fired body comprises at least one face (30c) with irregularities formed thereon among faces of said periphery honeycomb fired body in contact with said adhesive layer (40).

2. The honeycomb structured body according to claim 1, wherein
one of the faces with said irregularities formed thereon in said periphery honeycomb fired body is the face having the smallest area among the faces in contact with said adhesive layer.

3. The honeycomb structured body according to claim 1 or 2, wherein
one of the faces with said irregularities formed thereon in said periphery honeycomb fired body is the face in contact with an other periphery honeycomb fired body with said adhesive layer interposed therebetween.

4. The honeycomb structured body according to any of claims 1 to 3, wherein
an area of a cross section perpendicular to the longitudinal direction of said periphery honeycomb fired body is larger than an area of a cross section perpendicular to the longitudinal direction of said center-portion honeycomb fired body.

## Patentansprüche

1. Wabenstrukturkörper, der aufweist:
eine Vielzahl von säulenförmigen gebrannten bzw. gesinterten Wabenkörpern (20, 30), die mit einer dazwischen eingefügten Klebstoffschicht miteinander verbunden sind, wobei jeder der gesinterten Wabenkörper eine große Anzahl von Zellen hat, die in der Längsrichtung parallel zueinander angeordnet sind, wobei eine Zellenwand zwischen ihnen eingefügt ist,
wobei
die Vielzahl der gesinterten Wabenkörper einen gesinterten Mittelabschnittswabenkörper (20), der sich in einem Mittelabschnitt des Wabenstrukturkörpers befindet, und eine Vielzahl von gesinterten Umfangswabenkörpern Wabenkörpern (30) umfasst, wobei jeder gesinterte Umfangswabenkörper einen Teil der Umfangsfläche des Wabenstrukturkörpers bildet, und
der gesinterte Umfangswabenkörper wenigstens eine Fläche (30c) mit darauf ausgebildeten Unregelmäßigkeiten unter den Flächen des gesinterten Umfangswabenkörpers in Kontakt mit der Klebstoffschicht (40) umfasst.

2. Wabenstrukturkörper nach Anspruch 1, wobei
eine der Flächen mit den darauf ausgebildeten Unregelmäßigkeiten in dem gesinterten Umfangswabenkörper die Fläche ist, welche die kleinste Fläche unter den Flächen in Kontakt mit der Klebstoffschicht hat.

3. Wabenstrukturkörper nach Anspruch 1 oder 2, wobei
eine der Flächen mit den darauf ausgebildeten Unregelmäßigkeiten in dem gesinterten Umfangswabenkörper die Fläche ist, die mit einem anderen gesinterten Umfangswabenkörper in Kontakt ist, wobei die Klebstoffschicht dazwischen eingefügt ist.

4. Wabenstrukturkörper nach einem der Ansprüche 1 bis 3, wobei
eine Fläche eines Querschnitts senkrecht zu der Längsrichtung des gesinterten Umfangswabenkörpers größer als eine Fläche eines Querschnitts senkrecht zu der Längsrichtung des gesinterten Mittelabschnittswabenkörpers ist.

## Revendications

1. Corps de structure en nid d'abeilles comprenant :
une pluralité de corps étuvés en nid d'abeilles en forme de colonne (20, 30) associés les uns aux autres avec une couche adhésive interposée entre eux, chacun desdits corps étuvés en nid d'abeilles comportant un grand nombre de cellules placées longitudinalement, parallèlement les unes aux autres, une paroi de cellule étant interposée entre elles,
dans lequel
la pluralité desdits corps étuvés en nid d'abeilles comprend un corps étuvé en nid d'abeilles de partie centrale (20) situé dans une partie centrale dudit corps de structure en nid d'abeilles, et une pluralité de corps étuvés en nid d'abeilles périphériques (30),
dans lequel chaque corps étuvé en nid d'abeilles périphérique forme une partie de la face périphérique dudit corps de structure en nid d'abeilles, et ledit le corps étuvé en nid d'abeilles périphérique comprend au moins une face (30c) parmi les faces dudit de corps étuvé en nid d'abeilles périphérique en contact avec ladite couche adhésive (40) sur laquelle des irrégularités sont formées.

2. Corps de structure en nid d'abeilles selon la revendication 1, dans lequel
l'une des faces sur laquelle lesdites irrégularités sont formées sur ledit le corps étuvé en nid d'abeilles périphérique est la face présentant la surface la plus faible parmi les faces en contact avec ladite couche adhésive.

3. Corps de structure en nid d'abeilles selon la revendication 1 ou 2, dans lequel
l'une des faces sur laquelle lesdites irrégularités sont formées sur ledit le corps étuvé en nid d'abeilles périphérique est la face en contact avec un autre corps étuvé en nid d'abeilles périphérique, ladite couche adhésive étant interposée entre elles.

4. Corps de structure en nid d'abeilles selon l'une quelconque des revendications 1 à 3, dans lequel
une surface d'une section transversale perpendiculaire à la direction longitudinale dudit du corps étuvé en nid d'abeilles périphérique est supérieure à une surface d'une section transversale perpendiculaire à la direction longitudinale dudit du corps étuvé en nid d'abeilles de partie centrale.
